# DEMANDE DE BREVET EUROPEEN

(11) **EP 3 112 403 A1**
(43) Date de publication de la demande: **04.01.2017**
(21) Numéro de dépôt: 16152782.5
(22) Date de dépôt: 15.10.2010
(51) Int. Cl.: C08J 7/04, C09D 5/18

(54) **ARTICLE MOULE IGNIFUGE A BASE DE POLYAMIDE COMPRENANT UN REVETEMENT INTUMESCENT**

(30) Priorité: 16.10.2009 FR 0957259
(62) Demande divisionnaire de: 10781849.4
(71) Demandeur: RHODIA OPERATIONS, 93306 Aubervilliers (FR)
(72) Inventeur: GALLOU, Hélène, 62980 VERMELLES (FR); JIMENEZ, Maude, 59000 LILLE (FR); JAMA, Charafeddine, 59650 VILLENEUVE D'ASCQ (FR); DUQUESNE, Sophie, 59350 SAINT-ANDRE-LEZ-LILLE (FR); DELOBEL, René, 59650 VILLENEUVE D'ASCQ (FR); COUILLENS, Xavier, 69003 LYON (FR); BOURBIGOT, Serge, 59491 VILLENEUVE D'ASCQ (FR)
(74) Mandataire: Vande Gucht, Anne

(57) **Abrégé**

La présente invention concerne des articles moulés ignifugés à base de polyamide comprenant un revêtement intumescent. Ces articles, présentant d'excellentes propriétés d'ignifugation, comprennent dans la matrice polyamide au moins un système d'ignifugation, et présentent un revêtement intumescent sur au moins une des surface desdits articles moulés.

## Description

La présente invention concerne des articles moulés ignifugés à base de polyamide comprenant un revêtement intumescent. Ces articles, présentant d'excellentes propriétés d'ignifugation, comprennent dans la matrice polyamide au moins un système d'ignifugation, et présentent un revêtement intumescent sur au moins une des surfaces desdits articles moulés.

### ART ANTERIEUR

Les compositions à base de résine polyamide sont utilisées pour la réalisation d'articles par différents procédés de mise en forme désignés par le terme générique "moulage". Ces articles sont utilisés dans de nombreux domaines techniques. Parmi ceux-ci la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique et surtout une résistance au feu élevée.

L'ignifugation des compositions à base de résine polyamide a été étudiée depuis très longtemps. Ainsi, les ignifugeants principaux utilisés sont le phosphore rouge et, des composés halogénés tels que les dibromophénols, les polybromodiphényles, les polybromodiphényloxydes, et les polystyrènes bromés. Depuis une vingtaine d'années de nouvelles classes d'ignifugation ont été développées, telles que des composés organiques azotés appartenant à la classe des triazines telles que la mélamine ou ses dérivés comme le cyanurate de mélamine et plus récemment les phosphates, polyphosphates, pyrophosphates de mélamine, seuls ou en association avec des phosphonates ou les phosphinates organiques et/ou inorganiques.

L'avantage de cette dernière classe d'ignifugeants réside dans le fait que les composés concernés ne contiennent pas d'halogènes ni de phosphore rouge. En effet, les ignifugeants contenant des halogènes ou du phosphore rouge peuvent générer des gaz toxiques lors de la combustion de la composition polyamide, ou même durant l'élaboration de ladite composition. Toutefois, les quantités de certains composés à base de mélamine nécessaires pour obtenir une ignifugation satisfaisante sont très élevées, notamment pour les compositions contenant des charges de renfort sous forme de fibres telles que les fibres de verre. Cette concentration élevée en composés de mélamine présente certains inconvénients notamment pendant la fabrication de la composition, tels que la production de vapeur des composés mélaminés, ou pendant la production des articles moulés, tels que l'obstruction des conduits de ventilation et des dépôts dans les moules.

De même, les nouveaux systèmes ignifugeants phosphorés organiques ont un coût élevé et ont besoin d'être utilisés en grande quantité pour obtenir de bonnes propriétés d'ignifugation.

Une trop forte quantité d'agents ignifugeants dans une matrice polyamide conduit par ailleurs à une diminution de ses propriétés mécaniques.

Il existe ainsi un besoin de préparer des compositions polyamides ignifugées comprenant des teneurs en agent ignifugeants, notamment les composés organo-phosphorés, relativement faibles, ou en tout cas significativement plus faibles que la teneur habituellement utilisée pour obtenir une bonne capacité d'ignifugation.

### INVENTION

La demanderesse a mis en évidence de manière tout à fait inattendue qu'il était possible de réaliser des articles polyamides présentant d'excellentes propriétés d'ignifugation, tout en utilisant de faibles quantités d'agents ignifugeants, en effectuant un revêtement intumescent desdits articles polyamides.

La présente invention concerne ainsi des articles à base de polyamide ignifugé par un système d'ignifugation et comprenant un revêtement intumescent.

La présente invention a ainsi pour objet un article ignifugé obtenu par mise en forme d'une composition polyamide comprenant au moins un système d'ignifugation ; ledit article comprenant au moins sur une partie de sa surface un revêtement intumescent.

On entend au sens de l'invention par revêtement intumescent un revêtement d'un matériau dont la particularité réside en une expansion dudit revêtement en présence d'une chaleur excédant une certaine température. Ce matériau présente ainsi entre autres des propriétés de retard de la propagation de la combustion.

On entend par surface la couche superficielle d'un article polyamide selon l'invention. Une surface est généralement une portion délimitée par une frontière ou des limites. Une surface peut être notamment plane, concave et/ou convexe selon les articles et leur complexité.

### Polyamide

L'article selon l'invention est obtenu par mise en forme d'une composition à base de polyamide ; c'est-à-dire comprenant au moins un polyamide.

Le polyamide est choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de masses moléculaires adaptées aux procédés de moulage par injection, bien que l'on puisse utiliser aussi des polyamides de plus faibles viscosités. On peut également utiliser des polyamides de plus hautes masses moléculaires notamment pour ce qui concerne des procédés de transformation de type extrusion ou extrusion-soufflage.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2743077, FR 2779730, US 5959069, EP 0632703, EP 0682057 et EP 0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO 99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention peut comprendre entre 20 et 99 % en poids, préférentiellement entre 20 et 80 % en poids, plus préférentiellement entre 50 et 70 % en poids, de polyamide, par rapport au poids total de la composition.

La matrice de la composition peut également comprendre, outre le polyamide, un ou plusieurs autres polymères, notamment des polymères thermoplastiques.

La composition peut aussi comprendre des charges de renfort notamment choisies dans le groupe comprenant des fibres de verre, et/ou charges minérales telles que le kaolin, le talc ou la wollastonite, ou encore des charges exfoliables. La concentration pondérale des charges de renfort est comprise avantageusement entre 1 % et 50 % en poids par rapport au poids total de la composition, de préférence entre 15 et 50 %. On peut notamment utiliser un mélange de fibres de verre et de charges minérales, telle que de la wollastonite.

Les compositions de l'invention peuvent également comprendre tous les additifs habituellement utilisés dans les compositions à base de polyamide utilisées pour la fabrication d'articles moulés. Ainsi, on peut citer à titre d'exemple d'additifs les stabilisants thermiques, stabilisants U.V., antioxydants, lubrifiants, pigments, colorants, plastifiants ou des agents modifiant la résistance aux chocs. A titre d'exemple, les antioxydants et stabilisants chaleur sont, par exemple, des halogénures d'alcalins, des halogénures de cuivre, des composés phénoliques stériquement encombrés, des amines aromatiques. Les stabilisants U.V. sont généralement des benzotriazoles, des benzophénones ou des HALS.

Il n'y a pas de limitation aux types d'agents modifiants la résistance aux chocs. Ce sont généralement des polymères d'élastomères qui peuvent être utilisés à cet effet. Des exemples d'élastomères convenables sont les éthylène-ester acrylique-anhydride maléique, les éthylène-propylène-anhydride maléique, les EPDM (éthylène-propylène-diène monomère) avec éventuellement un anhydride maléique greffé. La concentration pondérale en élastomère est avantageusement comprise entre 0,1 et 15 % par rapport au poids total de la composition.

Les compositions de l'invention sont obtenues par mélange des différents constituants généralement dans une extrudeuse mono ou bivis, à une température suffisante pour maintenir la résine polyamide en milieu fondu. Généralement, le mélange obtenu est extrudé sous forme de joncs qui sont coupés en morceaux pour former des granulés. Les agents ignifugeants peuvent être ajoutés ensemble ou séparément, au polyamide par mélange à chaud ou à froid.

L'addition des composés et des additifs peut être réalisée par ajout de ces composés dans le polyamide fondu sous forme pure ou sous forme de mélange concentré dans une résine telle que par exemple une résine polyamide.

Les granulés obtenus sont utilisés comme matière première pour alimenter les procédés de fabrication d'articles tels que les procédés d'injection, de moulage par injection, d'extrusion et d'extrusion-soufflage.

L'article selon l'invention peut notamment être un article extrudé ou injecté.

Ainsi, la composition de l'invention convient particulièrement pour la fabrication d'articles utilisés dans le domaine de la connectique électrique ou électronique tels que les éléments de disjoncteurs, interrupteurs, connecteurs ou analogues.

### Agents Ignifugeants dans la matrice PA:

Le système d'ignifugation selon la présente invention peut comprendre tout type d'agents ignifugeants, c'est à dire des composés permettant de diminuer la propagation de la flamme et/ou ayant des propriétés d'ignifugation, bien connus de l'homme du métier. Ces agents ignifugeants sont habituellement utilisés dans des compositions ignifugées et sont notamment décrits, par exemple, dans les brevets US6344158, US6365071, US6211402 et US6255371, cités ici à titre de référence.

Avantageusement, le système d'ignifugation comprend au moins un agent ignifugeant choisi parmi le groupe comprenant :
* les agents ignifugeants contenant du phosphore, tels que :
   - les oxydes de phosphines comme par exemple l'oxyde de triphénylphosphine, l'oxyde de tri-(3-hydroxypropyl) phosphine et l'oxyde de tri-(3-hydroxy-2-méthylpropyl) phosphine.
   - les acides phosphoniques ou leurs sels ou les acides phosphiniques ou leurs sels, tels que par exemple les sels d'acides phosphiniques de zinc, de magnésium, de calcium, d'aluminium, ou de manganèse, notamment le sel d'aluminium de l'acide diéthylphosphinique ou le sel de zinc de l'acide diméthylphosphinique.
   - les phosphonates cycliques, tels que les esters de diphosphate cyclique tel que par exemple l'Antiblaze 1045.
   - les phosphates organiques, tels que le triphénylphosphate.
   - les phosphates inorganiques, tels que les polyphosphates d'ammonium et les polyphosphates de sodium.
   - le phosphore rouge, qu'il soit par exemple sous forme stabilisé ou revêtu, en poudre ou sous forme de masterbatches.
* les agents ignifugeants de type composés organiques azotés tels que par exemple les triazines, l'acide cyanurique et/ou isocyanurique, la mélamine ou ses dérivés comme le cyanurate de mélamine, l'oxalate, le phtalate, le borate, le sulfate, le phosphate, polyphosphate et/ou pyrophosphate de mélamine, les produits condensés de la mélamine, tel que la mélem, la mélam et le mélon, le tris(hydroxyéthyl) isocyanurate, la benzoguanamine, la guanidine, l'allantoïne, et le glycoluril.
* les agents ignifugeants contenant des dérivés halogénés, tels que :
   - les dérivés du brome tels que par exemple les PBDPO (polybromodiphényloxydes), le BrPS (polystyrène bromé et polybromostyrène), le poly(pentabromobenzylacrylate), l'indane bromé, le tétradécabromodiphénoxybenzène (Saytex 120), l'éthane-1,2-bis(pentabromophényl) ou Saytex 8010 d'Albemarle, le tétrabromobisphénol A et les oligomères époxy bromés. Notamment parmi les dérivés bromés, nous pouvons citer le polydibromostyrène tel que le PDBS-80 de Chemtura, les polystyrènes bromés tels que le Saytex HP 3010 d'Albemarle ou le FR-803P de Dea Sea Bromine Group, le décabromodiphényléther (DBPE) ou FR-1210 de Dea Sea Bromine Group, l'octabromodiphényléther (OBPE), le 2,4,6-Tris(2,4,6-tribromophénoxy)-1,3,5 triazine ou FR-245 de Dead Sea Bromine Group, le Poly(pentabromobenzylacrylate) ou FR-1025 de Dead Sea Bromine Group et les oligomères ou polymères à terminaisons époxy du tétrabromobisphénol-A comme tels que les F-2300 et F2400 de Dead Sea Bromine Group. - les composés chlorés, tel que par exemple un composé cycloaliphatique chloré comme le Dechlorane plus® (vendu par OxyChem, voir CAS 13560-89-9).

Ces composés peuvent être utilisés seuls ou en combinaison, parfois synergique. On préfère notamment une association synergique de composés contenant du phosphore comme les oxydes de phosphines, les acides phosphoniques ou leurs sels ou les acides phosphiniques ou leurs sels, et les phosphonates cycliques ; avec des dérivés azotés tels que le mélam, le mélem, le phosphate de mélamine, les polyphosphates de mélamine, les pyrophosphates de mélamine ou les polyphosphates d'ammonium.

La composition peut comprendre de 5 à 40 % en poids d'agents ignifugeants, par rapport au poids total de la composition.

### Revêtement intumescent

Les revêtements intumescents sont des produits dont la particularité réside dans leur transformation à la chaleur. A froid, l'épaisseur du film varie généralement de 0,1 à 4 mm d'épaisseur. Porté à une température comprise entre 180°C et 300°C, le produit gonfle et se transforme en mousse, atteignant généralement des épaisseurs de 30 à 40 mm. Ces revêtements sont mis en oeuvre selon des modes traditionnels utilisés dans le domaine notamment par l'intermédiaire de pistolets ou de brosses, mais nécessitent une grande rigueur dans leur phase d'application afin de s'assurer de l'homogénéité de la protection. La conservation de l'esthétique constitue le principal intérêt de ce type de protection qui peut atteindre des durées de protection d'une heure voire pour certaines solutions d'une heure et demi à deux heures. Les revêtements intumescents présentent également des propriétés de durabilité intéressantes et peuvent être utilisées en intérieur ou en extérieur. Du fait de ces différents avantages et de l'évolution de la réglementation, les revêtements intumescents connaissent des développements importants.

Presque tous les revêtements intumescents commercialisés pour les structures métalliques, qui conviennent également pour la présente invention, sont constitués de quatre composants principaux :
- la source acide : un composé susceptible de libérer un acide tel que par exemple l'acide phosphorique lorsqu'il est soumis à une élévation de température. Le polyphosphate d'ammonium (APP) ou des phosphates de mélamine sont généralement utilisés,
- la source de carbone : un composé organique, contenant des groupes hydroxyles susceptibles de réagir avec l'acide, tel que par exemple les groupements hydroxyles, typiquement le pentaerythritol,
- l'agent d'expansion : un composé libérant sous l'action de la chaleur une quantité importante de gaz ininflammables provoquent l'expansion de la structure phosphocarbonée, comme par exemple la mélamine,
- et enfin le liant : une substance généralement liquide associée ou non à un solvant qui emprisonne les particules de pigments ou d'additifs et forme un film solide après séchage. Cette substance peut notamment être une résine acrylique ou époxy par exemple. Le liant est l'élément de base du revêtement qui permet de le caractériser.

Le revêtement intumescent peut être choisi dans le groupe constitué par : les revêtement aqueux, les revêtements glycéro, les revêtements cellulosiques, les revêtements vinyliques, les revêtements acryliques, les revêtements polyuréthane et les revêtements epoxy.

Le revêtement utilisé selon l'invention est préférablement une peinture ou un vernis ; tel que par exemple un vernis intumescent, transparent, mat à base aqueuse et souple, et ayant une bonne adhésion avec la matrice polyamide.

Il est généralement admis que le mécanisme conduisant au développement de l'intumescence est le suivant. Dans un premier temps, la source acide sous l'action d'une élévation de température se décompose libérant par exemple de l'acide phosphorique qui réagit avec l'agent source de carbone pour former des esters de phosphates et de l'eau. Ces esters se décomposent ensuite et conduisent à la formation d'une structure phosphocarbonée plus généralement appelée «char». Puisque ces réactions se produisent à des températures supérieures à 100°C, l'eau libérée est immédiatement transformée en vapeur. Cette vapeur d'eau, ainsi que les gaz de décomposition de l'agent gonflant transforme la structure phosphocarbonée en une mousse. Le liant va aider au piégeage des gaz de décomposition et va avoir une influence significative sur le taux d'expansion, sur la taille des cellules qui composent la mousse et donc sur les performances de résistance au feu de la structure intumescente.

L'adhésion entre la surface à traiter de l'article et le revêtement intumescent est un point important à considérer. De façon générale, on distingue le modèle d'adhésion mécanique des modèles d'adhésion spécifique qui recouvrent tous les phénomènes autres que l'ancrage mécanique pur. Parmi ces derniers, on distingue la théorie de la diffusion, et la théorie de l'adsorption thermomécanique, ou théorie du mouillage. Il existe également les modèles d'adhésion électrique ou chimique.

L'adhésion mécanique résulte d'un ancrage mécanique dans les pores et les aspérités du substrat. L'adhésion par diffusion résulte de l'interdiffusion des molécules des plans superficiels se traduisant par la création d'une zone de transition appelée interphase ou interface épaisse. L'adhésion par interdiffusion repose sur deux critères fondamentaux : un critère thermodynamique : les macromolécules doivent être mutuellement solubles ou compatibles, et un critère cinétique : les macromolécules doivent présenter une mobilité suffisante, d'où l'importance de la température. Lorsque ces deux conditions sont réunies, on a interpénétration des chaînes macromoléculaires. La force nécessaire pour produire la rupture est proportionnelle d'une part au nombre de chaînes qui ont traversé l'interface et, d'autre part, à la profondeur moyenne de pénétration des macromolécules. Cette théorie est bien vérifiée dans le cas de l'adhésion de polymères compatibles par exemple.

La théorie du mouillage a été initiée par Sharpe et Schonhorn. Selon cette théorie, l'adhésion est attribuée aux forces intermoléculaires de type Van der Waals existants à l'interface. Ces liaisons intermoléculaires sont faibles et non dirigées. Elles ont un champ d'action de l'ordre des distances intermoléculaires. De ce fait, pour qu'elles s'établissent, il est nécessaire de créer un contact intime entre les deux surfaces. D'une manière générale, le critère d'une bonne adhésion est essentiellement un critère de mouillabilité.

Pour augmenter l'adhésion entre la surface à traiter de l'article et le revêtement intumescent il est possible de préalablement traiter la surface au plasma ou au flammage par exemple. Le substrat peut notamment être préalablement traité par flammage afin d'augmenter la qualité d'adhésion du revêtement intumescent de type peinture ou vernis sur le polymère. Le flammage consiste à exposer la surface à traiter à une oxydation thermique, une flamme oxydante est crée lors de la combustion d'un hydrocarbure. Les paramètres de flammage optimisés sont par exemple : une distance entre la flamme et la surface de 8,8 cm, une vitesse du banc de flammage de 200 m/s, trois passages de l'échantillon devant la flamme et l'utilisation du méthane comme gaz de combustion.

On peut notamment citer comme revêtements intumescents les produits suivants :
- FX-100 ® de Flame Seal Products
- Nullifire (par exemple S607 - peinture)
- Unitherm 19010 - vernis
- A650P - vernis Comus
- Char17 - vernis d'IRIS Vernici s.r.l.,IT
- Firesteel de Firetherm Intumescent and Insulation Supplies, Ltd. of Kent, United Kingdom;
- Firetex d'Altex Coatings, Ltd. of Bay of Plenty, New Zealand;
- A/D Firefilm® de AD Fire Protection Systems, Ltd. of Ontario, Canada;
- Taikalitt de Nippon Paint Company of Osaka, Japan;
- Safecoat Products d'Eagle Specialized Coatings and Protected Environments, division de DW Pearce Enterprises, Ltd. of British Columbia, Canada

Les revêtements intumescents sont appliqués sur au moins une partie de la surface de l'article selon l'invention. On appliquera notamment le revêtement sur les parties de la surface qui seront susceptibles d'être en contact avec de fortes chaleurs, notamment les flammes.

On préfère notamment utiliser des revêtements intumescents ne comprenant pas d'agent d'ignifugation tels que ceux pouvant être utilisés en masse dans la composition polyamide de l'invention.

La présente invention concerne aussi un procédé de fabrication d'article ignifugé dans lequel on applique un revêtement intumescent sur au moins une partie de la surface de l'article, après avoir éventuellement conduit une étape de traitement de la surface pour accroitre l'adhésion entre la surface et le revêtement.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Matériels utilisés

Les essais ont été effectués sur du polyamide 6,6 vierge, du polyamide 6,6 chargé à 2 % en nanocharges silicates intercalées (Nanofil SE3010 de Sud-Chemie), du polyamide 6,6 chargé à 30 % en fibres de verre (Vetrotex 983) et du polyamide 6,6 chargé à 30 % en fibres de verre et 2 % en nanocharges.

Dans certaines formulations, des agents ignifugeants ont été ajoutés :
- FR1 : Phosphinate d'aluminium (OP 1230 de Clariant)
- FR2 : l'éthane 1,2 bis (pentabromophényl) (Saytex 8010 d'Albermale)

3 types de revêtements ont été utilisés : une peinture intumescente, le NULLIFIRE S607HB (Nullifire) ; et deux vernis intumescents, l'A650P (SEPV-Comus) et PYROPLAST HW (Rustifrance)

### Procédure de dépôt des revêtements

La procédure de dépôt se déroule en deux étapes : un prétraitement et une étape de dépôt. Le substrat est préalablement traité par flammage à une température de l'ordre de 1000°C afin d'augmenter la qualité d'adhésion du revêtement intumescent sur le polymère lors de l'étape suivante. Le flammage consiste à exposer la surface à traiter à une oxydation thermique, une flamme oxydante est créée lors de la combustion d'un hydrocarbure. Les paramètres de flammage optimisés lors d'études précédentes sont : une distance entre la flamme et la surface de 8,8 cm, une vitesse du banc de flammage de 200 m/s, trois passages de l'échantillon devant la flamme et l'utilisation du méthane comme gaz de combustion.

L'application du revêtement intumescent est réalisée à l'aide d'un pinceau ou peut être effectuée par pulvérisation.

Le test à la rayure a montré que le traitement au flammage permet d'améliorer l'adhésion des revêtements sur le polymère. Ceci a été observé au test de quadrillage au cutter avec un Elcometer ® 107. Ce test qui fournit une appréciation qualitative de l'adhérence consiste à rayer la surface du substrat à l'aide d'un cutter à six ou onze dents distantes d'un millimètre de manière à tracer un quadrillage de 25 ou 100 carrés, selon le nombre de dents du cutter, de 1 mm². On lui applique ensuite un morceau d'adhésif normalisé que l'on retire au bout de 90 ± 30 secondes. L'inspection de la surface quadrillée après retrait de l'adhésif permet de classer les propriétés adhésives du substrat en fonction de la quantité de revêtement arraché. Les essais sont réalisés dans le respect de la norme *ASTM D 3359-02 « Standard Test Methods for Measuring Adhesion by Tape Test ».*

### Mesures des propriétés d'ignifugation

Le LOI (Indice Limite d'Oxygène) exprimé en pourcentage et le test UL94 ont été effectués de manière classique.

L'appareil d'essai au fil incandescent permet de mesurer le GWFI (Glow Wire Flammability Index). Le GWFI consiste à simuler un choc thermique et à évaluer les risques d'ignition et la capacité d'auto-extinction du feu généré par un même matériau. La méthode consiste à appliquer l'extrémité d'un fil chauffant et/ou incandescent à une température donnée (550, 650, 750, 850, 960°C) pendant 30 s sur une éprouvette de 60 mm x 60 mm avec une force donnée comprise entre 0,8 et 1,2 N et à mesurer le temps d'extinction des flammes après retrait du fil.

Le produit est caractérisé par la température pour laquelle 3 éprouvettes consécutives s'éteignent d'elles-mêmes en moins de 30 s après retrait du fil incandescent.

Durant l'essai, ce qui suit doit être noté :
- La durée (tᵢ) depuis le début de l'application de l'extrémité du fil incandescent jusqu'à l'instant où l'éprouvette d'essai ou la sous-couche spécifiée prend feu.
- La durée (tₑ) depuis le début de l'application de l'extrémité du fil incandescent jusqu'à l'instant où les flammes s'éteignent, pendant ou après la période d'application.
- La hauteur maximale de n'importe quelle flamme sans toutefois prendre en considération le début de l'inflammation, qui peut produire une flamme haute pendant environ 1 s.
- Si l'éprouvette d'essai réussit l'essai parce que la plus grosse partie enflammée est emmenée avec le fil incandescent.
- Toute inflammation de la sous-couche placée sous le spécimen (ceci contraint la mise en oeuvre d'un nouvel essai sur 3 nouvelles éprouvettes à une température moins élevée).

L'éprouvette d'essai doit être observée pendant l'application du fil incandescent. Le temps d'allumage (tᵢ), c'est à dire la durée entre le début de l'application de l'extrémité du fil et le temps où l'éprouvette d'essai s'allume, doit être noté.

Le cône calorimètre est un appareil permettant entre autre d'accéder à l'évolution de la quantité de chaleur dégagée par la combustion de l'échantillon, à l'inflammabilité, la perte de masse, l'opacité des fumées et les taux de CO/CO₂ dégagés durant l'essai. L'échantillon est placé de façon horizontale et est soumis à un niveau contrôlé d'irradiance. Le test est effectué en milieu ouvert, en présence d'extracteurs. Les échantillons sont soumis, dans l'air ambiant, à un flux de chaleur émis par un cône tronqué (flux de chaleur compris entre 0 et 100 kW/m²) de manière à ne pas perturber la flamme. Le débit calorifique est évalué suivant le principe de la calorimétrie par consommation d'oxygène. Différents analyseurs couplés à ce système permettent l'évaluation de la perte de masse, de l'opacité des fumées (coefficient d'extinction k) et des taux de CO et CO₂, durant la combustion (analyseurs infrarouges). Le temps d'ignition est mesuré par ce test.

### Résultats

Les résultats des essais sont mentionnés dans les tableaux suivants :

**Tableau 1**

| | **LOI 0,8 mm** | **LOI 1,6 mm** | **UL94 0,8 mm** | **UL94 1,6 mm** | **GWFI 0,8 mm** | **GWFI 1,0 mm** |
|---|---|---|---|---|---|---|
| **C1 : vierge** | 20-21 | 20-21 | NC | NC | 650 | 650 |
| **C2 : FV** | 20-21 | 20-21 | NC | NC | 650 | 650 |
| **C3 : Nano** | 21-22 | 21-22 | NC | NC | 650 | 650 |
| **C4 : FV Nano** | 21-22 | 22-23 | NC | NC | 650 | 650 |
| | | | | | | |
| **C5 : FV + 23% FR1** | 41-42 | 43-44 | V0 | V0 | 960 | 960 |
| **C6 : FV + 18% FR1** | 37-38 | 39-40 | V1 | V1 | 960 | 960 |
| **C7 : FV + 15% FR1** | 36-37 | 37-38 | V1 | V1 | 960 | 960 |
| **C8 : FV + 12% FR1** | 36-37 | 35-36 | V1 | V1 | 960 | 960 |
| **C9 : FV + 10% FR1** | 33-34 | 34-35 | V1 | V1 | 960 | 960 |
| **C10 : FV + 8% FR1** | 29-30 | 32-33 | V1 | V1 | 960 | 960 |
| **C11 : FV + 5% FR1** | 26-27 | 27-28 | NC | NC | 850 | 850 |
| | | | | | | |
| **C12 : A650P** | 24-25 | 24-25 | NC | NC | 650 | 650 |
| **C13 : FV + A650P** | 27-28 | 26-27 | NC | NC | 750 | 750 |
| **C14 : Nano + A650P** | 24-25 | 25-26 | NC | NC | 650 | 650 |
| **C15 : FV Nano + A650P** | 28-29 | 28-29 | NC | NC | 750 | 850 |
| **C16 : Nullifire** | - | 30-31 | NC | NC | 650 | 650 |
| **C17 : FV + Nullifire** | - | 40-41 | NC | NC | 650 | 650 |
| **C18 : Nano + Nullifire** | - | 40-41 | NC | NC | 650 | 650 |
| **C19: FV Nano + Nullifire** | - | 42-43 | NC | NC | 750 | 850 |
| | | | | | | |
| **C20: 24 % FR2** | - | - | V2 | V2 | - | - |

**Tableau 2**

| | **LOI 0,8 mm** | **LOI 1,6 mm** | **UL94 0,8 mm** | **UL94 1,6 mm** | **GWFI 0,8 mm** | **GWFI 1,0 mm** |
|---|---|---|---|---|---|---|
| **1. FV + 18% FR1 + A650P** | 40-41 | 42-43 | V0 | V0 | 960 | 960 |
| **2. FV + 12% FR1 + A650P** | 36-37 | 37-38 | V0 | V0 | 960 | 960 |
| **3. FV + 8% FR1 + A650P** | 33-34 | 33-34 | V0 | V0 | 960 | 960 |
| **4 : FV + 5% FR1 + Pyroplast HW** | 63-64 | 65-66 | V0 | V0 | 960 | 960 |
| **5. 24 % FR2 + Pyroplast HW** | 64-65 | 69-60 | V0 | V0 | - | - |

**Tableau 3**

| | **Cône calorimètre Temps d'ignition (sans ignition forcée avec panneau d'irradiance de 50 kW/m²)** |
|---|---|
| **C1 : vierge** | 80 |
| **C2 : FV** | 54 |
| **C3 : Nano** | 53 |
| **C4 : FV Nano** | 51 |
| **C5 : FV + 23 % FR1** | 69 |
| **C6 : FV + 18% FR1** | 69 |
| **C8 : FV + 12% FR1** | 63 |
| **C10 : FV + 8% FR1** | 60 |
| | |
| **2. FV + 12% FR1 + A650P** | 123 |
| **3. FV + 8% FR1 + A650P** | 123 |
| **4 : FV + 5% FR1 + Pyroplast HW** | 219 |
| **6. FV + 23 % FR1 + Pyroplast HW** | 318 |

On observe ainsi que les articles ignifugés de l'invention comprenant au moins sur une partie de leurs surfaces un revêtement intumescent présentent de bien meilleurs propriétés d'ignifugation par rapport aux compositions polyamides ignifugées classiquement utilisées.

## Revendications

1. Article ignifugé obtenu par mise en forme d'une composition polyamide comprenant au moins un système d'ignifugation ; ledit article comprenant au moins sur une partie de sa surface un revêtement intumescent.

2. Article selon la revendication 1, **caractérisé en ce que** la composition comprend en outre des charges de renfort.

3. Article selon la revendication 1 ou 2, **caractérisé en ce que** le système d'ignifugation de la composition polyamide comprend au moins un agent ignifugeant contenant du phosphore choisi dans le groupe constitué par : les oxydes de phosphines, les acides phosphoniques ou leurs sels, les acides phosphiniques ou leurs sels, les phosphonates cycliques, les phosphates organiques, les phosphates inorganiques, et le phosphore rouge.

4. Article selon l'une quelconque des revendications 1 à 3, **caractérisé en ce que** le système d'ignifugation de la composition polyamide comprend au moins un agent ignifugeant de type composés organiques azotés choisis dans le groupe constitué par : les triazines, l'acide cyanurique et/ou isocyanurique, la mélamine ou ses dérivés, l'oxalate, le phtalate, le borate, le sulfate, le phosphate, polyphosphate et/ou pyrophosphate de mélamine, les produits condensés de la mélamine, le tris(hydroxyéthyl) isocyanurate, la benzoguanamine, la guanidine, l'allantoïne, et le glycoluril.

5. Article selon l'une quelconque des revendications 1 à 4, **caractérisé en ce que** le système d'ignifugation de la composition polyamide comprend au moins un agent ignifugeant contenant des dérivés bromés choisis dans le groupe constitué par : les PBDPO (polybromodiphényloxydes), le BrPS (polystyrène bromé et polybromostyrène), le poly(pentabromobenzylacrylate), l'indane bromé, le tétradécabromodiphénoxybenzène, l'éthane-1,2-bis(pentabromophényl), le tétrabromobisphénol A et les oligomères époxy bromés.

6. Article selon l'une quelconque des revendications 1 à 5, **caractérisé en ce que** la composition comprend de 5 à 40 % en poids d'agents ignifugeants, par rapport au poids total de la composition.

7. Article selon l'une quelconque des revendications 1 à 6, **caractérisé en ce que** le revêtement intumescent comprend une source d'acide, une source de carbone, un agent d'expansion et un liant.

8. Article selon l'une quelconque des revendications 1 à 7, **caractérisé en ce que** le revêtement intumescent est choisi dans le groupe constitué par : les revêtement aqueux, les revêtements glycéro, les revêtements cellulosiques, les revêtements vinyliques, les revêtements acryliques, les revêtements polyuréthane et les revêtements epoxy.

9. Article selon l'une quelconque des revendications 1 à 8, **caractérisé en ce que** le revêtement intumescent est une peinture ou un vernis.

10. Article selon l'une quelconque des revendications 1 à 9, **caractérisé en ce que** ledit article est un article extrudé ou injecté.

11. Procédé de fabrication d'un article selon l'une quelconque des revendications 1 à 10, dans lequel on applique un revêtement intumescent sur au moins une partie de la surface de l'article, après avoir éventuellement conduit une étape de traitement de la surface pour accroitre l'adhésion entre la surface et le revêtement.

12. Procédé selon la revendication 11 dans lequel l'augmentation de l'adhésion entre la surface et le revêtement est effectuée par traitement au plasma ou traitement au flammage.
